# EUROPEAN PATENT APPLICATION

(11) **EP 2 862 727 A1**
(43) Date of publication of application: **22.04.2015**
(21) Application number: 14189131.7
(22) Date of filing: 16.10.2014
(51) Int. Cl.: B60C 5/00, B60C 17/06

(54) **Wheel and tire assembly**

(30) Priority: 17.10.2013 US 201314056567
(71) Applicant: DEERE & COMPANY, Moline, Illinois 61265-8098 (US)
(72) Inventor: Duppong, Steven A, Cedar Falls, IA 50613 (US); Roth, Jonathan T, Cedar Falls, IA 50613 (US)
(74) Representative: Dehnhardt, Florian Christopher

(57) **Abstract**

A wheel and tire assembly (10) comprises a wheel rim (14). A tire (12) is mounted on the wheel rim (14), the tire (12) and the wheel rim (14) enclosing an annular volume (16). A foam insert (24) only partially fills said annular volume (16), said foam insert (24) displacing air within the annular volume (16) and not being bonded to the tire (12), wherein said foam insert (24) maintaining its shape and its mass distribution within the tire (12).

## Description

The invention refers to a wheel and tire assembly with foam insert.

A central tire inflation system (CTIS) uses an air compressor to provide pressurized air to all the wheel and tire assemblies on a vehicle, in order to modulate the tire pressure. By displacing the air volume within the wheel and tire assembly, the amount of air that has to be pumped to the wheel and tire assembly in order to increase the tire pressure can be reduced. By reducing the amount or air that is required, the reaction time of the CTIS system can be reduced. Also, the size of air compressor required to meet the CTIS pressure change time can be reduced. Also, reducing the time that air is pumped across rotary axle seals will extend the life of the rotary axle seals. Thus, it is desired to have a wheel and tire assembly which reduces CTIS reaction time, lengthens rotary axle seal life and permits use of a smaller air compressor.

It is known to fill a tire with foam in order to provide a run flat capability. But, this requires that the foam to be in contact with a tire carcass, and the foam therefore effects the normal operation of the tire. In these designs, the foam affects the tire weight and spring rate. This could cause power hop issues, ride control, and customer comfort issues.

What is needed in the art is an improved wheel and tire assembly which overcomes the abovementioned drawbacks.

This and other objects are achieved by the present invention, wherein a wheel and tire assembly is provided. The wheel and tire assembly comprises a wheel rim. A tire is mounted on the wheel rim, the tire and the wheel rim enclosing an annular volume. A foam insert only partially fills said annular volume, said foam insert displacing air within the annular volume and not being bonded to the tire, wherein said foam insert maintaining its shape and its mass distribution within the tire.

The foam insert will displace air volume in the tire to improve the performance of a central tire inflation system. By displacing the air volume in the tire, the time required to modulate between pressures is reduced, and consequently rotary axle seal life is increased. The foam insert is not bonded to the tire, since this would affect the tire deflection properties, and thus affect tire ride and vehicle stability.

For a complete understanding of the objects, techniques, and structure of the invention reference should be made to the following detailed description and accompanying drawings, wherein similar components are designated by identical reference numerals:
- Fig. 1: is a perspective sectional view of a wheel and tire assembly according to a first embodiment of the invention,
- Fig. 2: is a perspective sectional view along lines 2-2 of Fig. 1,
- Fig. 3: is a perspective sectional view of a wheel and tire assembly according to a second embodiment of the invention,
- Fig. 4: is a perspective sectional view along lines 4-4 of Fig. 3,
- Fig. 5: is a perspective sectional view of a wheel and tire assembly according to a third embodiment of the invention, and
- Fig. 6: is a perspective sectional view along lines 6-6 of Fig. 5.

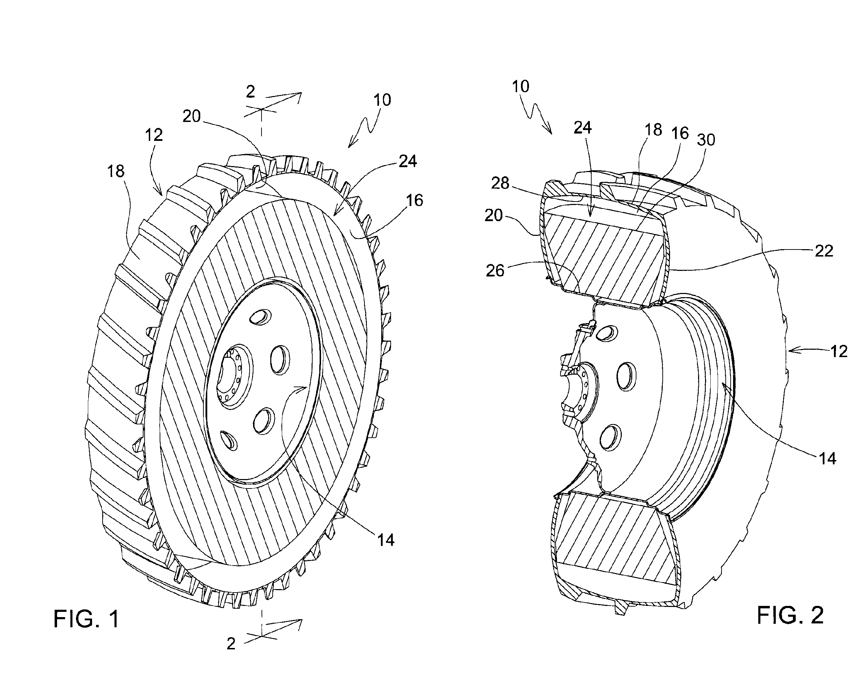

Referring to Figs. 1 and 2, a wheel and tire assembly 10 includes a conventional tire 12 mounted on a convention wheel rim 14. The tire 12 and the wheel rim 14 enclose an annular volume 16. The tire 12 includes an outer wall 18 and a pair of side walls 20 and 22 which connect an outer wall 18 to the wheel rim 14.

A foam insert 24 only partially fills the annular volume 16. The foam insert 24 displaces air within the annular volume 16. Various types of foam material will meet this condition. For example, the foam insert 24 could be polyethylene closed cell foam in an 8 pound per cubic foot or greater density, or a closed cell blended sponge rubber foam in an 8 pound per cubic foot or greater density, as well as other types.

The foam insert 24 is not bonded to the tire 12, and maintains its shape and its mass distribution within the tire 12. The foam insert 24 is not fixed to any interior surface of the wheel and tire assembly 10, but is engagable with a radially outer surface 26 of the wheel rim 14 and is spaced apart from an inner surface 28 of the outer wall 18. The foam insert 24 has a radially outer surface 30 which forms a surface of a cylinder with a uniform diameter.

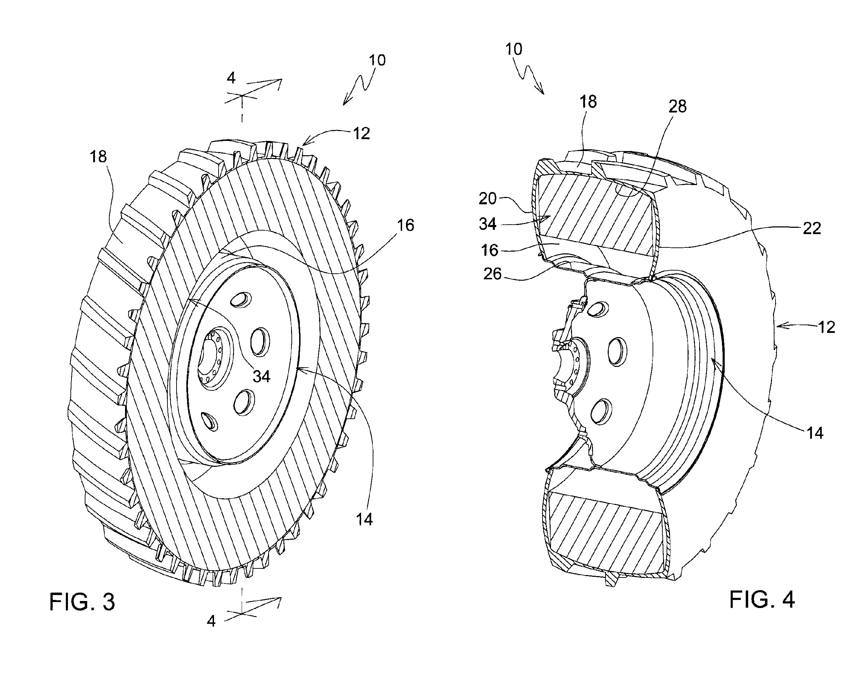

Referring to Figs. 3 and 4, a foam insert 34 is similar to the foam insert 24 described before, except that foam insert 34 is permitted to engage the inner surface 28 of the outer wall 18 and is spaced apart from the radially outer surface 26 of the wheel rim 14.

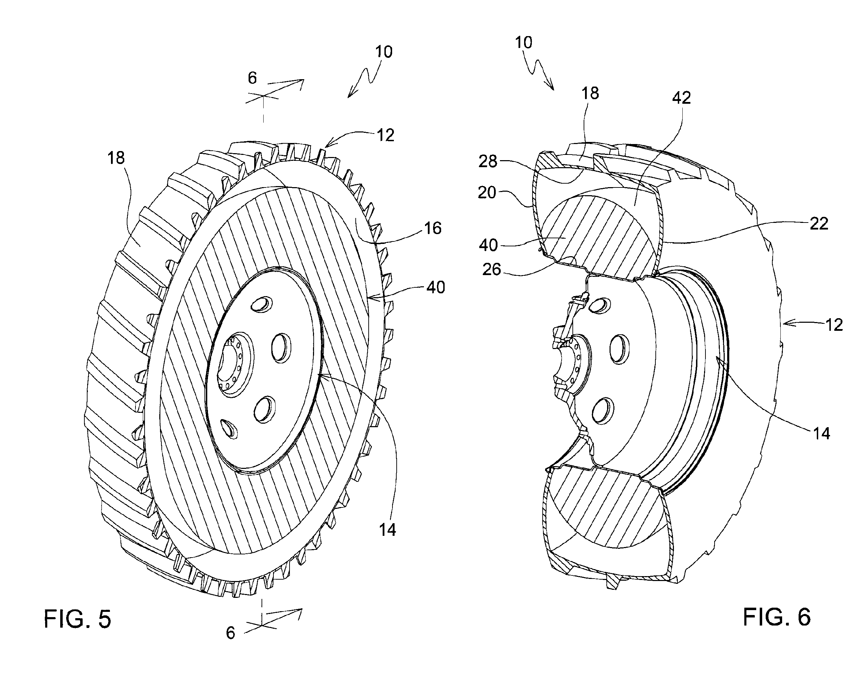

Referring now to Figs. 5 and 6, a foam insert 40 is similar to the foam inserts 24 and 34 described before, except that foam insert 40 is spaced apart from the inner surface 28 of the outer wall 18. Foam insert 40 is spaced apart from almost all of the side walls 20 and 22. The foam insert 40 is permitted to engage the radially outer surface 26 of the wheel rim 14 and is permitted to engage a radially inner portion of the side walls 20 and 22. In addition, foam insert 40 has a radially outer surface 42 which is curved in a cross sectional direction.

The result is a wheel and tire assembly which is partially filled with a loose piece of foam which merely displaces air in the tire so that the air volume in the tire is reduced and so that the tire can be more quickly inflated and deflated. The air volume of a wheel and tire assembly is partially filled with the foam insert. The foam insert is inactive and does not change over time. It has very low mass as to not influence the overall mass of the tire. It should not change the spring rate characteristic of the wheel and tire assembly. The foam insert is shaped so that it partially fills up the air volume in within the wheel and tire assembly. Also, the foam insert can be removed from the tire for service or repair needs.

## Claims

1. A wheel and tire assembly comprising a wheel rim (14); a tire (12) mounted on the wheel rim (14), the tire (12) and the wheel rim (14) enclosing an annular volume (16); and a foam insert (24, 34, 40) only partially filing said annular volume (16), said foam insert (24, 34, 40) displacing air within the annular volume (16) and not being bonded to the tire (12), wherein said foam insert (24, 34, 40) maintaining its shape and its mass distribution within the tire (12).

2. The wheel and tire assembly according to claim 1, **characterized in that** the tire (12) includes an outer wall (18) and a pair of side walls (20, 22) which connect the outer wall (18) to the wheel rim (14), wherein the foam insert (24) engages a radially outer surface (26) of the wheel rim (14) and is spaced apart from an inner surface (28) of the outer wall (18).

3. The wheel and tire assembly according to claim 2, **characterized in that** the foam insert (24) has a radially outer surface (30) which forms a surface of a cylinder.

4. The wheel and tire assembly according to claim 2 or 3, **characterized in that** the foam insert (24) has a radially outer surface (30) which has a uniform diameter.

5. The wheel and tire assembly according to claim 2, **characterized in that** the foam insert (40) has a radially outer surface (42) which is curved in a cross sectional direction.

6. The wheel and tire assembly according to claim 1, **characterized in that** the tire (12) includes an outer wall (18) and a pair of side walls (20, 22) which connect the outer wall (18) to the wheel rim (14), wherein the foam insert (34) engages an inner surface (28) of the outer wall (18) and is spaced apart from a radially outer surface (26) of the wheel rim (14).

7. The wheel and tire assembly according to claims 1 to 6, **characterized in that** the foam insert (24, 34, 40) comprises a closed cell foam with a density of at least 8 pounds per cubic foot.

8. The wheel and tire assembly according to claims 1 to 7, **characterized in that** the foam insert (24, 34, 40) is a polyethylene closed cell foam or a closed cell blended sponge rubber foam.
